(19) Europäisches Patentamt

European Patent Office

Office européen des brevets

(11) **EP 0 692 059 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(21) Anmeldenummer: **95902056.1**

(22) Anmeldetag: **08.12.1994**

(51) Int Cl.⁶: **E05F 15/12**, E05F 15/10

(86) Internationale Anmeldenummer:
**PCT/DE94/01459**

(87) Internationale Veröffentlichungsnummer:
**WO 95/21311 (10.08.1995 Gazette 1995/34)**

(54) **BETRIEBSVERFAHREN FÜR DEN BETRIEB EINER KARUSSELLTÜR**

PROCESS FOR OPERATING A REVOLVING DOOR

PROCEDE PERMETTANT DE FAIRE FONCTIONNER UNE PORTE A TAMBOUR

(84) Benannte Vertragsstaaten:
**AT BE CH DE DK ES FR GB IT LI NL SE**

(30) Priorität: **02.02.1994 DE 4402899**

(43) Veröffentlichungstag der Anmeldung:
**17.01.1996 Patentblatt 1996/03**

(73) Patentinhaber: **DORMA GmbH + Co. KG**
**D-58256 Ennepetal (DE)**

(72) Erfinder: **STARK, Jürgen**
**D-45527 Hattingen (DE)**

(56) Entgegenhaltungen:
**DE-A- 3 934 662**        **DE-A- 4 124 282**
**DE-C- 4 207 705**        **US-A- 4 581 849**

## Beschreibung

Die Erfindung betrifft ein Betriebsverfahren für den Betrieb einer Karusselltür, deren Drehflügel von einem Elektromotor angetrieben werden und der durch eine Mikroprozessorsteuerung bzw. Regelung in seinem Antriebs- und Drehzahlverhalten gesteuert bzw. geregelt wird, wobei jedoch der Elektromotor nicht die gesamte Antriebskraft aufbringt, sondern nur einen Teil und die Person, welche die Karusselltür passiert, durch den ständigen Kontakt mit dem Drehflügel auch auf diesen eine Kraft ausüben muß, welche nicht vom Elektromotor aufgebracht wird, um die Drehgeschwindigkeit der Drehflügel beizubehalten. Die Drehgeschwindigkeit der Drehflügel wird üblicherweise über einen Inkrementalgeber gemessen. Die mittig gelagerten, drehenden Drehflügel befinden sich innerhalb von zwei Trommelwänden, die in der Regel durch diametral gegenüberliegende Ein- und Ausgänge unterbrochen sind. Eine üblicherweise vorhandene notwendige Sicherheitselektronik, wie z.B. Sensoren usw., sind für den gefahrlosen Betrieb einer solchen Karusselltür entbehrlich.

Für die durch einen Elektromotor angetriebenen Drehflügel ist je nach Einbausituation in der Regel eine aufwendige Sensorik für die Sicherheit der benutzenden Personen notwendig. Dieses können insbesondere Schaltmatten, Sensorleisten, Lichtvorhänge, Infrarot- und Radarmelder und Lichtschranken sein. All diese Sensoren für sich genommen, gestatten es, einen gefahrlosen Betrieb einer solchen Karusselltür durchzuführen. Wird jedoch in zunehmendem Maße eine solche Sicherheitssensorik in eine Karusselltür eingebaut, so kann es passieren, daß aufgrund der unterschiedlichsten Sicherheitssysteme eine Tür in ihrem eigentlichen Laufverhalten quasi gestört wird, d.h. es kommt vielfach zur Notabschaltung dieser Karusselltür, was in der Regel eine manuelle Einschaltung einer solchen durch entsprechend geschultes Personal notwendig macht.

In der den Oberbegriffen der Ansprüche 1 bzw. 7 entsprechenden US 4,581,849 wird eine Karusselltür beschrieben, die einen motorischen Antrieb aufweist. Die Flügel der Karusselltür werden dabei jedoch durch erst eine manuell auf den Drehflügel auszuübende Kraft in Bewegung gesetzt. Dabei wird die Bewegung der Drehflügel erfaßt und an die Steuerung weitergegeben, die ihrerseits eine Drehung des Antriebsmotors bewirkt. Aufgrund der vorhandenen Sensorik läuft die Tür nachdem die Person die Tür verlassen hat, wieder in die X-Position und bleibt dort stehen.

Eine Karusselltür der vorgenannten Art ist aus der europäischen Schrift 0 340 771 A1 zu entnehmen. Die einzelnen an einem mittleren Bereich befestigten Türflügel werden von einem Antriebsmotor angetrieben.

Die deutsche Patentschrift 39 34 662 offenbart eine Karusselltür, welche mit einer Sicherheitsschaltung und einer elektrischen brems- oder arretierbaren Schwungmasse versehen ist. Eine mit einem Mikroprozessor ausgestattete programmierbare Steuerung steuert den Ablauf der Tür und sorgt ebenfalls dafür, daß die Sicherheitssensoren und -einrichtungen einen störungsfreien Lauf der Tür garantieren.

Neben den bereits vorbeschriebenen Karusselltüren gibt es auch solche, die nicht mit einem Antriebsmotor ausgestattet sind. Diese manuell betriebenen Karusselltüren sind in der Regel in ihrem Durchmesser begrenzt, da die benutzende Person die Drehflügel durch Eigenkraft manuell in Bewegung setzen muß. Gerade dieses ist insbesondere für ältere bzw. für behinderte Personen oft nur unter großen Anstrengungen bzw. gar nicht zu bewerkstelligen. Diesen manuell betriebenen Karusselltüren fehlt aufgrund der nicht vorhandenen Gefahren durch einen Antrieb jede Art von Sicherheitseinrichtungen, sie sind jedoch auch in ihren Baumaßen stark eingeschränkt.

Die Aufgabe der Erfindung ist es, ein Betriebsverfahren zur Steuerung bzw. Regelung für eine motorisch angetriebene Karusselltür zu schaffen, das es zuläßt, daß keine sonst üblicherweise für den Betrieb einer solchen Tür notwendige Sicherheitssensorik bzw. Sicherheitseinrichtungen für den Benutzer vorhanden sind. Eine weitere grundlegende Forderung besteht darin, daß diese Karusselltür für behinderte Personen bzw. für ältere Menschen ohne große Kraftanstrengung begehbar sein muß.

Die Aufgabe wird mit den Verfahren gemäß Ansprüche 1 und 7 dadurch gelöst, daß die durch eine Mikroprozessorsteuerung/Regelung angetriebene Tür nur in einem quasi Unterstützungsmode bzw. Servobetrieb durch den Elektroantrieb läuft, wobei die Person ebenfalls zur Kraftunterstützung beitragen muß. Um eine Karusselltür dieser Art in Bewegung zu setzen, muß auf mindestens einen der vorhandenen Drehflügel eine manuelle Kraft von der benutzenden Person in Bewegungsrichtung aufgebracht werden. Diese manuelle Kraft führt dazu, daß sich die Drehflügel in Bewegung setzen und dadurch eine Beschleunigungskraft durch die Meßergebnisse des Inkrementalgebers an die Mikroprozessorsteuerung/Regelung weitergeleitet wird. Die Mikroprozessorsteuerung erkennt dadurch, daß hier eine Drehgeschwindigkeit der Flügel vorliegt und sorgt nun ihrerseits dafür, daß der elektromotorische Antrieb eine Unterstützung dieser Drehgeschwindigkeit liefert. Diese Unterstützung ist so zu verstehen, daß von der gemessenen Umfangsgeschwindigkeit $v_m$ der Drehflügel bzw. der Beschleunigungskraft der Drehflügel, hervorgerufen durch die manuelle Kraft (Betätigungskraft) einer Person, die Mikroprozessorsteuerung/Regelung eine Unterstützungsgeschwindigkeit $v_u$ ausrechnet, die um einen Betrag $\Delta v$ geringer ist, als die Umfangsgeschwindigkeit $v_m$. Daraus ergibt sich für die Unterstützungsgeschwindigkeit $v_u$ der Drehflügel folgende Formel:

$$v_u = v_m - \Delta v$$

Die Gesamtgeschwindigkeit $v_m$ der Drehflügel setzt sich aus der Unterstützungsgeschwindigkeit $v_u$ durch den Elektromotor und der Differenz $\Delta v$ zur manuellen Kraft und damit Geschwindigkeit des Drehflügels $v_m$ zusammen, wobei nach der kurzen Anlaufphase der Drehflügel von dem Benutzer nur noch die wesentlich geringere Kraft aufgebracht werden muß, die der Geschwindigkeit $\Delta v$ entspricht. Es kann deshalb gesagt werden, daß die manuelle Kraft proportional der Geschwindigkeit $\Delta v$ ist. Bei einer großen Kraft ist die Geschwindigkeit der Drehflügel groß und bei einer kleinen Kraft gering. Dieser Zusammenhang macht deutlich, daß die Gesamtumfangsgeschwindigkeit der Drehflügel von den Komponenten der manuellen Geschwindigkeit und der Unterstützungsgeschwindigkeit durch den Elektromotor abhängt. Durch diese Voraussetzungen ist es möglich, daß hier ein Weglaufen des Türflügels von der Person unterbunden wird, weil ein ständiger Kontakt mit dem Drehflügel notwendig ist, um die Drehflügel am Laufen zu halten.

Um ein Regelverfahren zu schaffen, bei dem der Elektromotor einen Unterstützungsmode liefert, ist es notwendig, daß die von dem Inkrementalgeber erfaßte Umfangsgeschwindigkeit der Drehflügel $v_m$ erfaßt wird und in der Mikroprozessorsteuerung/Regelung entsprechend einem gewählten Ablaufprogramm verarbeitet wird.

Es wird deutlich, daß $v_u$ immer unter der manuellen Geschwindigkeit $v_m$ liegt. Der Wert des $\Delta v$ ist dabei in seinem Betrag einstellbar, so daß es möglich ist, die Karusselltür entsprechend ihrem Einsatzort dahingehend zu regeln bzw. zu steuern, daß hier ein entsprechender Unterstützungsmode für die benutzenden Personen vorherrscht, dieses kann insbesondere bei Türen mit unterschiedlich großen Durchmessern notwendig sein.

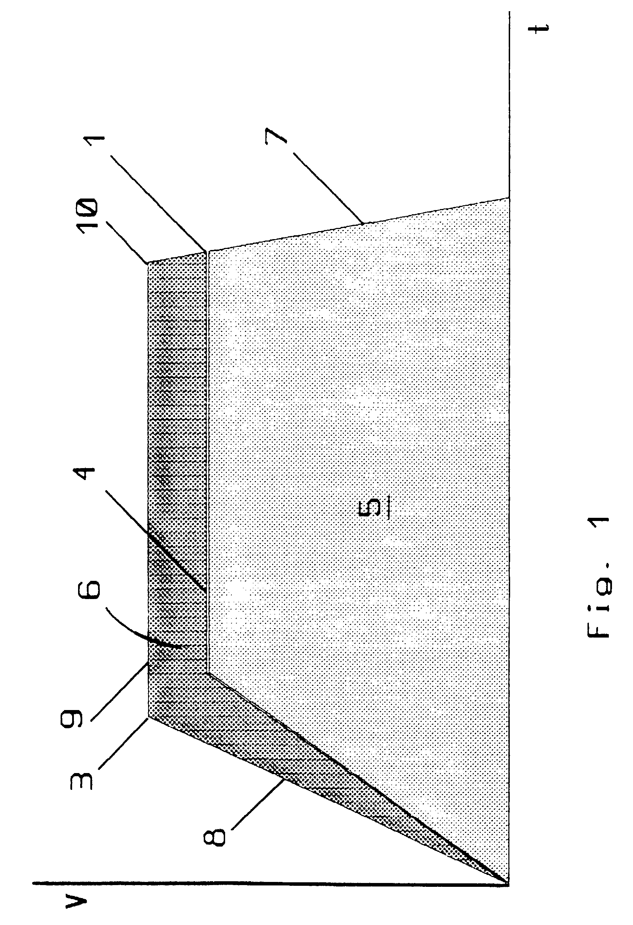

Die Figur 1 zeigt einen schematisierten Verlauf der Geschwindigkeit der Drehflügel über die Zeit.

Durch eine Krafteinwirkung auf mindestens einen der Drehflügel werden diese in Bewegung gesetzt. Aufgrund der in der Mikroprozessorsteuerung/Regelung abgelegten Anlauframpe 8 steigt die Gesamtgeschwindigkeit $v_m$ bis zum Punkt 3. Die Gesamtgeschwindigkeit wird aber nicht allein von der Person durch die Krafteinwirkung ausgeübt, sondern auch von dem Elektromotor, welcher seinen Anteil an der Gesamtgeschwindigkeit $v_m$ mit dem Kurvenverlauf 4 $v_u$ einbringt. Lediglich der verbleibende Rest von der Unterstützungsgeschwindigkeit $v_u$ zur Gesamtgeschwindigkeit $v_m$ wird als $\Delta v$ von der Person aufgebracht. Steigt die Kraft der Person nicht weiter an, so geht der Kurvenverlauf aus dem Bereich der Anlauframpe 8 in eine gleichförmige geradlinige Geschwindigkeit der Drehflügel über, nämlich die Bewegungsgeschwindigkeit 9. Diese Geschwindigkeit wird solange beibehalten, bis beispielsweise die Kraft auf den Drehflügel aufgehoben wird. Dieses hat zur Folge, daß im Punkt 10 die Gesamtgeschwindigkeit $v_m$ abfällt, weil die Unterstützung durch die Person fehlt. Dadurch schneiden sich im Punkt 1 die Geschwindigkeitslinien 9 und 4, so wird aufgrund der in der Mikroprozessorsteuerung / Regelung abgelegten Auslauframpe 7 die Geschwindigkeit der Drehflügel auf Null heruntergefahren. Dieses Herunterfahren nach der Auslauframpe 7 ist dem Auslaufen der Drehflügel einer rein manuellen Karusselltür nachgebildet.

Betrachtet man die Energieinhalte der Flächen unterhalb der Kurvenverläufe, so zeigt sich, daß die kinetische Energie des Antriebes 5 um ein vielfaches größer ist, als die kinetische Energie der Person 6. Der Antrieb liefert also nicht die volle Antriebsleistung, sondern gibt nur eine Unterstützung.

Bei einer bestehenden Karusselltür ist das $\Delta v$ konstant und kann beispielsweise in Prozenten von der manuell aufzubringenden Umfangsgeschwindigkeit der Drehflügel angegeben und in einem entsprechenden nichtflüchtigen Speicher abgelegt werden, um dann gemäß dem gewählten Ablaufprogramm verarbeitet zu werden. Unabhängig von der Umfangsgeschwindigkeit der Drehflügel durch die manuelle Kraft, ist die Unterstützungsgeschwindigkeit des Elektromotors ein fester Betrag von der Gesamtgeschwindigkeit, so daß bei kleinen und großen Umfangsgeschwindigkeiten der Drehflügel die Geschwindigkeitsdifferenz immer gegeben ist und durch den ständigen Druckkontakt auf den einzelnen Drehflügel die Tür für die benutzenden Personen nicht wegläuft. Nach der kurzen Anfangsphase, wo eine größere Kraft aufgewendet werden muß, ist danach eine geringere Kraft notwendig, um den Flügel zu bewegen, als im Normalfall bei rein manuell betriebenen Karusselltüren. Trotzdem bestimmt die drückende Person, wie schnell sich die Drehflügel bewegen sollen. Es wird aufgrund des erfindungsgemäßen Gedankens eine Unterstützung der momentanen Geschwindigkeit durch den Elektromotor gegeben, der jedoch stets unter der manuell geforderten bzw. gewünschten Drehgeschwindigkeit der Drehflügel liegt. Dieser Unterstützungsmode stellt einen Bedienkomfort für die benutzenden Verkehrskreise dar, indem nur eine sehr geringe Kraft aufgewendet werden muß, um die Drehflügel zu betätigen.

Um eine stehende Karusselltür in Bewegung zu setzen, kann alternativ zu der vorbeschriebenen Vorgehensweise auch eine Auslösung über einen Kontakt, Schalter, Taster, das Erfassen der Kraft über Dehnungsmeßstreifen oder eine andere geeignete elektrische oder elektronische Sensorik erfolgen. Es muß jedoch anschließend der Druckkontakt auf dem Drehflügel vorhanden sein.

Bei dieser Art eines Betriebsverfahrens für eine Karusselltür ist es notwendig, daß die benutzenden Personen einen ständigen Kontakt während der Drehbewegung der Drehflügel mit diesen haben. Wird der direkte Kontakt aufgehoben, so verringert sich die Geschwindigkeit der Drehflügel und sie laufen aus. Dieses wird dadurch gelöst, daß in einem Speicher eine Bremskurve oder Auslauframpe abgelegt ist, die einem Auslaufen einer von Hand betriebenen Tür nachgebildet ist.

Bei einer konstanten Kraft auf den Drehflügel, bewegt sich dieser mit einer konstanten Geschwindigkeit. Wird diese Kraft und damit die Geschwindigkeit gesteigert, so bleibt auch das $\Delta v$ im Betrag nach gleich, d.h. es wird von dem Elektromotor eine größere Unterstützung gegeben. Beim Absinken der Handunterstützung wird das Abschalten der motorischen Unterstützung eingeleitet.

Eine Karusselltür, die nach dem beschriebenen Betriebsverfahren betrieben wird, kann ohne Sicherheitssensorik für die Personen betrieben werden. Einzig und allein durch die benutzende Person wird die Umfangsgeschwindigkeit bestimmt, d.h. befinden sich innerhalb der Kabinette zwischen den einzelnen Drehflügeln mehrere Personen, so bestimmt die Person die Drehgeschwindigkeit der Drehflügel, die die größte Kraft auf den vor sich befindlichen Drehflügel ausübt. Es ist jedoch auch möglich, daß eine andere Person, der die Umfangsgeschwindigkeit zu groß ist, eine Bremswirkung durch Zurückhalten des vor ihr liegenden Drehflügels ausübt, und dadurch im gesamten die Umfangsgeschwindigkeit der Drehflügel herabsetzt. Der erfindungsgemäße Gedanke dieses Betriebsverfahrens stellt demzufolge nicht nur eine Geschwindigkeitssteuerung aufgrund der Gehgeschwindigkeit der benutzenden Person dar, sondern es muß auch gleichzeitig ein Flügelkontakt zwischen dieser Person und dem Drehflügel herrschen. Dies ist äquivalent zu einer manuellen Karusselltür zu sehen.

Bei der an einer Karusselltür vorhandenen Sensorik muß unterschieden werden zwischen einer Sensorik für das normale Laufverhalten einer Tür und der sogenannten Sicherheitssensorik. Dabei ist die Laufsensorik beispielsweise ein Tachogenerator oder Inkrementalgeber, mit denen die Umfangsgeschwindigkeit der Drehflügel gemessen wird. Die Sicherheitssensorik ist für die Sicherheit der Personen notwendig, die eine normale Karusselltür passieren. Dieses sind insbesondere Lichtschranken, Infrarotmelder, Kontaktmatten, Sensorleisten, Radarmelder usw. All diese Sicherheitssensorik verteuert die Karusselltür enorm. Wenn es also möglich ist, auf diese zu verzichten, bei gleichzeitigem gefahrlosen Begehen einer solchen Tür mit dem erfindungsgemäßen Betriebsverfahren, eröffnet sich für den Betreiber einer mit diesem Verfahren betriebenen Tür, eine kostengünstige Alternative.

Es ist auch denkbar, daß eine Person einen Schalter, Taster oder Sensor auslöst, um die Tür aus dem Stillstand in Bewegung zu versetzen. Im Anschluß daran ist es jedoch zwingend notwendig, einen Druckkontakt mit einem der Drehflügel herzustellen, damit die Kraft und damit die Umdrehungsgeschwindigkeit der Drehflügel ermittelt werden kann, für die Unterstützung des Antriebes.

## Patentansprüche

1. Betriebsverfahren für den Betrieb einer Karusselltür, deren Drehflügel aufgrund einer manuell aufzubringenden Kraft auf die Drehflügel von einem Elektromotor über eine Steuerung, die die Bewegung der Drehflügel erfaßt, in Bewegung gesetzt und gesteuert werden, dadurch gekennzeichnet, daß die Karusselltür durch die ständig aufzubringende manuelle Kraft in einem Unterstützungsmode bzw. Servobetrieb betrieben wird, wobei die durch die manuelle Kraft erzeugte Bewegung der Drehflügel erfaßt, indem die Umfangsgeschwindigkeit $v_m$ der Drehflügel durch einen Inkrementalgeber ermittelt und an eine zentrale Mikroprozessorsteuerung / Regelung weitergeleitet wird, wobei die Mikroprozessorsteuerung / Regelung aus der Umfangsgeschwindigkeit $v_m$ eine Unterstützungsgeschwindigkeit $v_u$ als Steuer- bzw. Regelvorgabe für den Elektromotor herausrechnet, die um einen einstellbaren Betrag $\Delta v$ geringer ist, als die Umfangsgeschwindigkeit $v_m$.

2. Betriebsverfahren nach Anspruch 1, dadurch gekennzeichnet, daß die elektromotorische Unterstützung solange erhalten bleibt, wie eine manuelle Kraft auf einen der Drehflügel ausgeübt wird.

3. Betriebsverfahren nach Anspruch 2, dadurch gekennzeichnet, daß nach dem Wegfall der manuellen Kraft die Drehflügel durch eine von der Mikroprozessorsteuerung/Regelung vorgegebenen Auslauframpe (7) zum Stillstand kommen.

4. Betriebsverfahren nach Anspruch 3, dadurch gekennzeichnet, daß die Auslauframpe (7) dem Verhalten eines manuellen Auslaufens der Drehflügel entspricht.

5. Betriebsverfahren nach Anspruch 1, dadurch gekennzeichnet, daß der Betrag $\Delta v$ der Unterstützung durch den Elektromotor einstellbar ist.

6. Betriebsverfahren nach einem oder mehreren der vorhergehenden Ansprüche, dadurch gekennzeichnet, daß an der Karusselltür keine für die Sicherheit der benutzenden Personen notwendige Sicherheitssensorik vorhanden ist.

7. Betriebsverfahren für den Betrieb einer Karusselltür, deren Drehflügel aufgrund einer manuell aufzubringenden Kraft auf die Drehflügel von einem Elektromotor über eine Steuerung, die die Bewegung der Drehflügel erfaßt, in Bewegung gesetzt und gesteuert werden, dadurch gekennzeichnet, daß die Drehflügel durch ein auszulösendes Sensorsignal in Bewegung gesetzt werden und anschließend die Karusselltür durch die ständig aufzubringende manuelle Kraft in einem Unterstützungsmode bzw. Servobetrieb betrieben wird, wobei die durch die manuelle Kraft erzeugte Bewegung der Drehflügel erfaßt, indem die Umfangsgeschwindigkeit $v_m$ der Drehflügel durch einen Inkrementalgeber ermittelt und an eine zentrale Mikroprozessorsteuerung/Regelung weitergeleitet wird, wobei die Mikroprozessorsteuerung/Regelung aus der Umfangsgeschwindigkeit $v_m$ eine Unterstützungsgeschwindigkeit $v_u$ als Steuer- bzw. Regelvorgabe für den Elektromotor herausrechnet, die um einen einstellbaren Betrag $\Delta v$ geringer ist, als die Umfangsgeschwindigkeit $v_m$.

## Claims

1. A method of operation a revolving door, the leaves of which, as a result of force applied manually thereto, are set in motion and controlled by an electric motor via a control system which detects the motion of the leaves, characterised in that the revolving door is operated in a support or servo mode by the manually force, which must be continiously applied, wherein the motion of the leaves generated by the manual force is detected in that the peripheral speed $v_m$ of the leaves is determined by an incremental transmitter and delivered to a central microprocessor unit, wherein the microprocessor automatic control unit calculates a support speed $v_u$ as an automatic control presetting for the electric motor, from the peripheral speed $v_m$, the support speed being smaller by an adjustable amount $\Delta v$ than the peripheral speed $v_m$.

2. A method according to claim 1, characterised in that the electric motor support is maintained as long as manual force is exerted on one of the leaves.

3. A method according to claim 2, characterised in that after the manual force is relaxed, the leaves are stopped by a deceleration curve (7) preset by the microprocessor automatic control system.

4. A method according to claim 3, characterised in that the deceleration curve (7) corresponds to manual slowing down of the leaves.

5. A method according to claim 1, characterised in that the amount $\Delta v$ of the support by the electric motor is adjustable.

6. A method according to one or more of the preceding claims, characterised in that the revolving door not require any safety sensory mechanism for ensuring the safety of the persons using it.

7. A method of operating a revolving door, the leaves of which, as a result of force applied manually thereto, are set in motion and controlled by an electric motor via a control system which detects the motion of the leaves, chararacterised in that the revolving leaves are set in motion by a sensor signal which must be triggered, after which the revolving door is operated in a support or servo mode by the manual force, which must be continuously applied, wherein the motion of the leaves generated by the manual force is detected in that the peripheral speed $v_m$ of the leaves is determined by an incremental transmitter and delivered to a central microprocessor automatic control unit, wherein the microprocessor automatic control unit calculates a support speed $v_u$, as an automatic control presetting for an electric motor, from the peripheral speed $v_m$, the support speed being smaller by an adjustable amount $\Delta v$ than the peripheral speed $v_m$.

## Revendications

1. Procédé de mise en oeuvre d'une porte à tambour dont les battants tournants sont mis en mouvement et commandés par un moteur électrique, à partir d'une force manuelle exercée sur les battants tournants, par une commande qui détecte le mouvement des battants tournants, caractérisé en ce que la porte à tambour fonctionne en mode d'assistance ou d'asservissement par une force manuelle qui dont être exercée en permanence, selon lequel on détecte le mouvement des battants tournants engendré par la force manuelle, en déterminant la vitesse périphérique $v_m$ des battants tournants par un capteur incrémental et en transmettant l'information à une commande/régulation centrale à microprocesseur, la commande/régulation à microprocesseur calculant, à partir de la vitesse périphérique $v_m$, une vitesse de soutien $v_u$ comme valeur de consigne de commande ou de régulation du moteur électrique, cette vitesse étant inférieure de la valeur réglable $\Delta v$ à la vitesse périphérique $v_m$.

2. Procédé de mise en oeuvre selon la revendication 1, caractérisé en ce qe l'assistance par un moteur électrique reste appliquée aussi longtemps qu'une force manuelle est exercée sur l'un des battants tournants.

3. Procédé de mise en oeuvre selon la revendication 2, caractérisé en ce qu'après la disparition de la force manuelle exercée sur les battants tournants, la commande/régulateur à microprocesseur conduit les battants tournants à l'arrêt selon une rampe de fin de course (7) prédéterminée.

4. Procédé de mise en oeuvre selon la revendication 3. caractérisé en ce que la rampe de fin de course (7) correspond au comportement d'une fin de course manuelle des battants tournants.

5. Procédé de mise en oeuvre selon la revendication 1, caractérisé en ce que l'amplitude $\Delta v$ de l'assistance fournie par le moteur électrique est réglable.

6. Procédé de mise en oeuvre selon l'une quelconque des revendications précédentes, caractérisé par des capteurs de sécurité équipant la porte à tambour pour assurer la sécurité des utilisateurs.

7. Procédé de mise en oeuvre d'une porte à tambour dont les battants tournants sont mis en mouvement et commandés par un moteur électrique, à partir d'une force manuelle exercée sur les battants tournants, par une commande qui détecte le mouvement des battants tournants, caractérisé en ce que les battants tournants sont mis en mouvement par un signal de capteur de déclenchement puis la porte la porte à tambour fonctionne en mode d'assistance ou d'asservissement par l'application permanente d'une force manuelle, selon lequel on détecte le mouvement des battants tournants créé par la force manuelle en déterminant la vitesse périphérique $v_m$ des battants tournants par un capteur incrémental et on transmet le signal à une commande/régulation centrale à microprocesseur, cette commande/régulation à microprocesseur calculant comme grandeur de consigne de commande ou de régulation du moteur électrique une vitesse de soutien $v_u$ à partir de la vitesse périphérique $v_m$, cette vitesse de consigne étant inférieure d'une amplitude réglable $\Delta v$ à la vitesse périphérique $v_m$.

Fig. 1